Europäisches Patentamt

European Patent Office

Office européen des brevets

(19)

(11) **EP 0 645 037 B1**

(12) **EUROPÄISCHE PATENTSCHRIFT**

(45) Veröffentlichungstag und Bekanntmachung des Hinweises auf die Patenterteilung:
**07.07.1999 Patentblatt 1999/27**

(21) Anmeldenummer: **94911832.7**

(22) Anmeldetag: **07.04.1994**

(51) Int Cl.⁶: **G06T 7/20**

(86) Internationale Anmeldenummer:
**PCT/DE94/00385**

(87) Internationale Veröffentlichungsnummer:
**WO 94/24634 (27.10.1994 Gazette 1994/24)**

(54) **VERFAHREN ZUR DETEKTION VON ÄNDERUNGEN IN BEWEGTBILDERN**

PROCESS FOR DETECTING CHANGES IN MOVING IMAGES

PROCEDE PERMETTANT DE DETECTER DES MODIFICATIONS SURVENANT DANS DES IMAGES EN MOUVEMENT

(84) Benannte Vertragsstaaten:
**CH DE FR IT LI**

(30) Priorität: **10.04.1993 DE 4311972**

(43) Veröffentlichungstag der Anmeldung:
**29.03.1995 Patentblatt 1995/13**

(73) Patentinhaber: **ROBERT BOSCH GMBH**
**70442 Stuttgart (DE)**

(72) Erfinder:
• **MESTER, Rudolf**
**D-31130 Hildesheim (DE)**

• **AACH, Til**
**D-52064 Aachen (DE)**

(56) Entgegenhaltungen:
**EP-A- 0 515 890**

• **PATENT ABSTRACTS OF JAPAN vol. 14, no. 296 (P-1067) 26. Juni 1990 & JP,A,02 093 320 (NIPPON PETROCHEM CO LTD.) 4. April 1990**
• **AUTOMAZIONE E STRUMENTAZIONE, Bd.38, Nr.4, April 1990, ITALY Seiten 125 - 128 CARNIMEO L. ET AL. 'Room monitoring using intraframe adaptive filtering applied to image differences'**

**Beschreibung**

Stand der Technik

Die Erfindung geht aus von einem Verfahren zur Detektion von Änderungen in Bewegtbildern nach der Gattung des Hauptanspruches.

Ein Anwendungsgebiet der Detektion von Änderungen in Bewegtbildern liegt in der Verkehrsüberwachung und der Sicherheitstechnik. Die Detektion von geänderten Bildbereichen ermöglicht eine automatische Detektion von bewegten Objekten z.B. Fahrzeuge bei einer automatischen Verkehrsüberwachung oder das Erkennen von nicht erlaubten Eindringen beim Objektschutz.

Ein Verfahren zur Detektion von Änderungen in Bewegtbildern besteht darin, ein Bild in bewegte Objekte und einen konstanten Hintergrund einzuteilen. Bei diesem Verfahren werden die bewegten Objekte als zusammenhängende Bildausschnitte behandelt, deren Bewegung über einen Bewegungsvektor oder einen Satz von Bewegungsvektoren beschrieben werden kann.

Es sind schon Verfahren bekannt, bei denen die Änderung der Bildsignale bildpunktweise mit einer Schwelle verglichen werden und dann die Bildsignale als geändert oder nicht geändert entschieden werden. Die Schwelle wird nach A.Gerhard, "Bewegungsanalyse bei der Codierung von Bildsequenzen," Dissertation am Lehrstuhl für Nachrichtentechnik der TU München, 20.09.1988, S. 69, ermittelt, indem von einer Grundschwelle ein lokaler Wert einer tiefpaßgefilterten und normierten Version eines Differenzbetragsbildes, das aus dem aktuellen und dem zeitlich vorhergehenden Bild ermittelt wird, abgezogen wird. Die Information, ob ein Bildpunkt als geändert oder nicht geändert entschieden wurde, wird in einer binären Maske abgelegt.

Um jedoch zusammenhängende geschlossene Bildausschnitte nach diesem Verfahren zu erreichen, ist es notwendig, die binäre Maske in einem weiteren Schritt nachzuverarbeiten. Dazu werden Verfahren wie z.B. lineare Filterungen, Erosions- und Dilatations-Verfahren und Flächen-Zuwachsverfahren angewendet.

Weiterhin wird bei D.J. Conner, "A Frame-to-Frame Picturephone Coder For Signals Containing Differential Quantizing Noise", ATT Bell System Technical Journal, Vol. 52, No. 1, 1973, S. 36 ff. ein Verfahren zur Erkennung von bewegten Objekten beschrieben. Dieses Verfahren verwendet ein vertikal gemitteltes Bilddifferenzsignal und ein in bezug auf Rauschen kompensiertes und über eine Fläche gemitteltes Bilddifferenzsignal.

Mit Hilfe des vertikal gemittelten Bilddifferenzsignals wird zuerst entschieden, ob eine bewegte Kante, d.h. ein bewegtes Objekt erkannt wurde und ein Flip Flop auf 1 gesetzt. Dieses Flip-Flop wird erst dann wieder auf 0 gesetzt, d.h. das betrachtete Bildpixel wird als ruhendes Objekt identifiziert, wenn ein Akkumulator in einem Block von 8x3 Bildpixeln weniger als eine festgelegte Anzahl von Bildpixeln zählt, deren Bilddifferenzsignal über einer Schwelle $T_2$ bzw. $T_3$ liegt.

Vorteile der Erfindung

Das erfindungsgemäße Verfahren mit den kennzeichnenden Merkmalen des Hauptanspruchs hat demgegenüber den Vorteil, daß die Schwelle, mit der die Änderung der Bildsignale verglichen wird, in Abhängigkeit von der Umgebung der zu entscheidenden Bildsignale gebildet wird. Dabei wird sowohl die zeitliche als auch die örtliche Umgebung eines zu entscheidenden Bildausschnittes berücksichtigt. Die Schwelle wird umso kleiner, je mehr angrenzende Bildausschnitte bei dem Vergleich mit ihrer Schwelle bereits als geändert entschieden wurden. Dabei wird die Tatsache berücksichtigt, daß die Wahrscheinlichkeit groß ist, daß sich ein Bildausschnitt ändert, wenn sich dessen Umgebung ändert und die Wahrscheinlichkeit klein ist, daß sich ein Bildausschnitt ändert, wenn sich dessen Umgebung nicht ändert.

Wesentlich ist ferner, daß der Vergleich mit der Schwelle anhand einer Größe geschieht, die aus dem Bildpunktdifferenzen mehrerer Pixel berechnet wird. Eine solche Größe ist mit wesentlich weniger statistischen Fluktuationen behaftet und führt somit zu einer zuverlässigen Entscheidung.

Von weiterem Vorteil ist, daß für die Ermittlung der Schwelle auch Bildausschnitte der vorhergehenden Bilder verwendet werden. Dadurch nimmt die Sicherheit, eine richtige Entscheidung über die Änderung bzw. NichtÄnderung eines Bildausschnittes zu treffen, zu, da eine Änderung eines Bildausschnittes nicht nur von den angrenzenden Bildausschnitten, sondern auch von den Bildausschnitten vorhergehender Bilder abhängt.

Weiterhin ist von Vorteil, daß die Feststellung einer Änderung oder Nichtänderung eines Bildausschnittes nicht für alle Bildpixel eines Bildausschnittes individuell bestimmt werden muß sondern größeren Detektionszellen zugewiesen werden kann. Dadurch wird das Verfahren ohne großen Verlust an Qualität der binären Entscheidungsmaske beschleunigt.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, daß zur Ermittlung der Schwelle die Ergebnisse der Vergleiche der Änderungen der im Beobachtungsfenster enthaltenen Bildausschnitte mit ihren Schwellen nach Abstand und Orientierung in bezug auf den zu vergleichenden Bildausschnitt unterschiedlich gewichtet berücksichtigt werden. Dadurch ist es möglich, die Schwelle in Abhängigkeit von einer größeren Umgebung zu ermitteln, wobei zeitliche und örtliche Abstände zum zu entscheidenden Bildausschnitt ihrer Lage und damit Ihrer Aussagekraft über die Wahrscheinlichkeit der Änderunc bzw. der nicht Änderung des zu entscheidenden Bildausschnittes entsprechend gewichtet berücksichtigt werden.

Eine direkte Ermittlung der Änderung eines Bildausschnittes besteht darin, die Bildsignale des zu entscheidenden Bildausschnittes von den Bildsignalen des gleich angeordneten Bildausschnittes eines zeitlich vorausgehenden Bildes voneinander abzuziehen und diese Bilddifferenz auszuwerten.

Die Entscheidung, ob ein Bildbereich als geändert anzusehen ist, kann für einzelne Bildpunkte oder für zusammenhängende Blöcke von Pixeln getroffen werden, je nachdem, ob eine hohe Ortsauflösung oder ein niedriger Rechenaufwand wichtiger ist.

Vorzugsweise kann als Änderung der Bildsignale aufeinander folgender Bilder die Summe der quadrierten Differenzen der Bildsignale innerhalb eines Bildausschnittes, die auf die Leistung (Varianz) des Kamerarauschens im Differenzbild bezogen werden (Differenzkamerarauschprozeß), betrachtet werden. Durch diese Normierung wird eine Anpassung an unterschiedlichste, verschieden verrauschte, Bildsequenzen erreicht.

Alternativ dazu kann auch die Summe der Absolutbeträge der Bildpunktdifferenzen verwendet werden.

Eine vorteilhafte Bildung des Beobachtungsfensters besteht aus dem zu vergleichenden Bildausschnitt und den angrenzenden Bildausschnitten. Damit wird bei der Ermittlung der Schwelle die nächste Umgebung des zu vergleichenden Bildausschnittes, die die größte Aussagekraft über die Wahrscheinlichkeit einer Änderung bzw. einer Nichtänderung des Bildausschnittes aufweist, bei der Ermittlung der Schwelle berücksichtigt.

Vorteilhaft ist es, bei der Ermittlung der Schwelle nicht nur die entschiedenen zum selben Bild wie der zu entscheidende Bildausschnitt gehörenden Bildausschnitte zu berücksichtigen, sondern auch die in der Bildebene gleich angeordneten Bildausschnitte des vorausgehenden Bildes, die schon mit einer Schwelle verglichen worden sind, zu verwenden. Dadurch wird auch die zeitliche Entwicklung eines Bildausschnittes bei der Ermittlung der Schwelle berücksichtigt.

Eine besondere Ausführungsform des Verfahrens besteht darin, das Ergebnis des Vergleichs des in bezug auf den zu vergleichenden Bildausschnitt in der Bildebene gleich angeordneten Bildausschnittes mit seiner Schwelle mindestens eines vorausgehenden Bildes zu berücksichtigen. Dabei wird berücksichtigt, daß die Wahrscheinlichkeit für ein Bildsignal, dessen Umgebung sich schon längere Zeit nicht mehr geändert hat, größer ist, daß sich das Bildsignal weiterhin nicht ändert und bei einem Bildsignal, dessen Umgebung sich in vorausgegangenen Bildern schon öfters geändert hat, die Wahrscheinlichkeit größer ist, daß sich dieses Bildsignal wieder ändern wird.

Eine sehr wesentliche Eigenschaft des Verfahrens besteht darin, daß die Schwelle aus einem festgelegten Anteil und einem variablen Anteil, der in Abhängigkeit von den Ergebnissen der Vergleiche der im Beobachtungsfenster enthaltenen Bildausschnitte mit ihren Schwellen ermittelt wird, gebildet wird.

Eine Vereinfachung des Verfahrens wird erreicht, wenn bei der Ermittlung der Änderung eines Bildausschnittes nur eine Teilmenge der im Bildausschnitt enthaltenen Bildsignale verwendet wird. Dadurch wird eine Reduzierung der Rechenzeit erreicht, ohne daß die Qualität der binären Maske nennenswert verschlechtert wird.

Zeichnung

Ein Ausführungsbeispiel der Erfindung ist in der Zeichnung dargestellt und in der nachfolgenden Beschreibung näher erläutert. Es zeigen Figur 1 eine Vorrichtung zur Aufnahme und zur Auswertung von Bildsignalen, Figur 2 zwei zeitlich aufeinander folgende Bilder, wobei das Beobachtungsfenster auf beide Bilder verteilt ist, Figur 3 ein Struktogramm zur Darstellung des Verfahrensablaufs.

Beschreibung des Ausführungsbeispiels

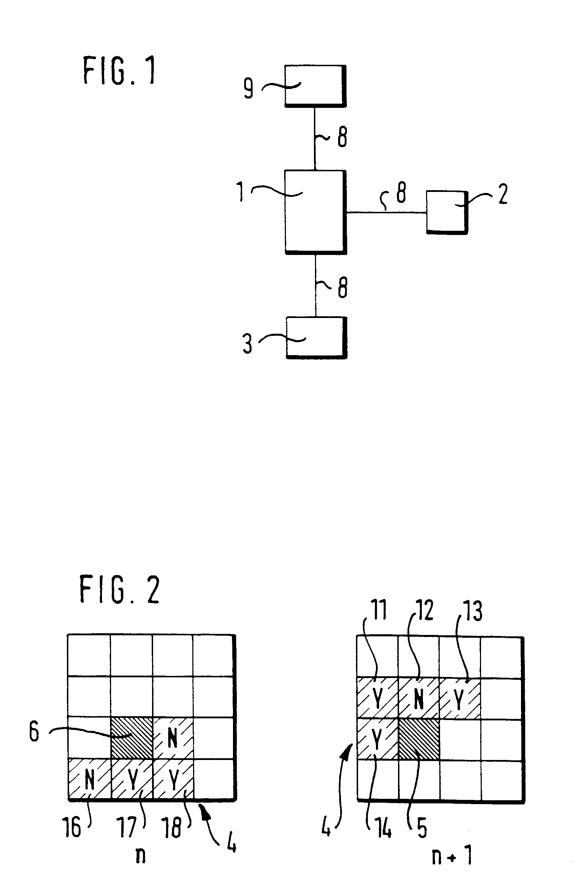

Figur 1 zeigt eine Recheneinheit 1, die über Datenleitungen 8 eine Bildaufnahmeeinheit 3, z.B. eine Videokamera, steuert und die von der Videokamera aufgenommenen Bilddaten in einem Speicher 2 ablegt. Die Recheneinheit 1 legt die aufgenommenen Bilder pixelweise in dem Speicher 2 ab. Figur 1 zeigt weiterhin eine Eingabeeinheit 9, die zur Eingabe von Daten über Datenleitungen 8 mit der Recheneinheit 1 verbunden ist.

Figur 2 zeigt zwei zeitlich aufeinander folgende Bilder, wobei die Bilder jeweils in 16 quadratische Bildausschnitte eingeteilt sind. In dem Raster des Bildes n+1 ist der zu entscheidende Bildausschnitt 5 dunkel schraffiert eingezeichnet. In dem zeitlich vorhergehenden Bild n ist der dem zu entscheidenden Bildausschnitt 5 zeitlich vorausgehende im Bild n gleich angeordnete Bildausschnitt 6 dunkel schraffiert eingezeichnet.

In diesem Beispiel ist das gewählte Beobachtungsfenster 4 des Bildes n+1 schraffiert eingezeichnet und besteht aus den Bildausschnitten 11, 12, 13, 14, die an den zu entscheidenden Bildausschnitt 5 angrenzen und schon mit einer Schwelle verglichen worden sind. Die Ergebnisse der Vergleiche der Bildausschnitte sind mit Y für "geändert" und mit N für "nicht geändert" in der Figur 2 eingetragen. Bei diesem gewählten Verfahren werden die Bildausschnitte der Reihe nach von links nach rechts und von oben nach unten mit einer Schwelle verglichen.

Deshalb ergibt sich für den zu vergleichenden Bildausschnitt 5 das in Bild n+1 schraffiert eingezeichnete, umrandete Beobachtungsfenster 4, das aus den drei über dem zu entscheidenden Bildausschnitt liegenden Bildausschnitten 11, 12, 13 und dem links neben dem zu entscheidenden Bildausschnitt 5 liegender Bildausschnitt 14 besteht. Der rechts an den zu entscheidenden Bildausschnitt 5 angrenzende Bildausschnitt und die in der folgenden Zeile angrenzenden Bildausschnitte können für die Ermittlung der Schwelle nicht berücksichtigt werden, da sie zu dem Zeitpunkt noch nicht mit einer Schwelle verglichen worden sind. Um diesen Mangel an Information auszugleichen, werden die im zeitlich vorausgehenden Bild n schraffiert eingezeichneten Bildausschnitte 15, 16, 17, 18 zur Ermittlung der Schwelle als Teil des Beobachtungsfensters 4 berücksichtigt. Dabei handelt es sich um Bildausschnitte des vorangehenden Bildes n, für die schon eine Entscheidung mit einer Schwelle getroffen worden ist und deren Ergebnis in jedem Bildausschnitt mit Y für "geändert" und N für "nicht geändert" eingetragen ist.

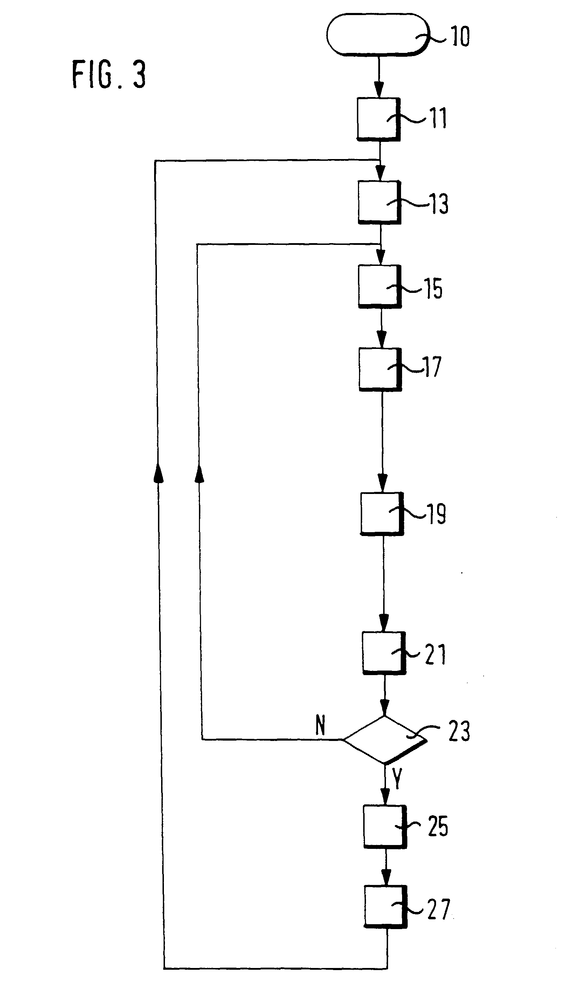

Figur 3 zeigt einen schematischen Programmablauf für das verwendete Verfahren. Bei Programmpunkt 10 startet das Programm. Bei Programmpunkt 11 werden für den Ablauf des Programms notwendige Größen über die Eingabeeinheit 9 eingegeben und von der Recheneinheit 1 im Speicher 2 abgelegt: Das Raster für die Einteilung der Bilder in Bildausschnitte, die Größe d.h. die Anzahl der Bildpixel pro Bildausschnitt, die Größe des Beobachtungsfensters 4 und die Vorgehensweise, wie die Bildausschnitte des gesamten Bildes mit einer Schwelle verglichen werden, werden eingelesen. Die Berechnungsmethode für die Änderung eines Bildausschnittes, die Berechnung der Schwelle aus den Ergebnissen der Vergleiche der im Beobachtungsfenster enthaltenen Bildausschnitte wird ebenfalls eingelesen und im Speicher abgelegt. Bei Programmpunkt 13 nimmt die Bildaufnahmeeinheit 3 ein Bild auf und die Recheneinheit 1 legt das aufgenommene Bild pixelweise im Speicher 2 ab. Bei Programmpunkt 15 wählt die Recheneinheit 1 den ersten Bildausschnitt und das entsprechende Beobachtungsfenster. Bei Programmpunkt 17 ermittelt die Recheneinheit 1 aus den Ergebnissen der Vergleiche der im Beobachtungsfenster 4 liegenden Bildausschnitte und der über die Eingabeeinheit 9 eingegebenen Berechnungsmethode die Schwelle, die für den zu entscheidenden Bildausschnitt 5 verwendet wird und legt diese im Speicher 2 ab. Bei Programmpunkt 19 ermittelt die Recheneinheit 1 die Änderung zwischen den Bildsignalen des zu vergleichenden Bildausschnittes und den Bildsignalen des gleich angeordneten Bildausschnittes 6 des vorhergehenden Bildes. Daraufhin vergleicht die Recheneinheit 1 die ermittelte Änderung mit der im Speicher 2 abgelegten Schwelle. Bei Programmpunkt 21 ordnet die Recheneinheit 1 den Speicheradressen der Bildpixel des verglichenen Bildausschnittes 5 eine 1 zu, wenn die Änderung größer als die abgelegte Schwelle ist und eine 0, wenn die Änderung kleiner als die abgelegte Schwelle ist. Bei Programmpunkt 23 überprüft die Recheneinheit 1, ob alle Bildpixel mit einer Schwelle verglichen worden sind. Ist dies nicht der Fall, so wird nach Programmpunkt 15 zurückverzweigt und von der Recheneinheit 1 ein weiterer zu entscheidender Bildausschnitt 5 und das dazugehörige Beobachtungsfenster 4 aus den im Speicher 2 abgelegten Bildsignalen ausgewählt und die Programmpunkt 17 bis 23 wiederholt durchlaufen. Die Programmpunkte 15, 17, 19, 21 und 23 werden so oft abgearbeitet, bis alle Bildpixel mit einer Schwelle verglichen worden sind. Ergibt die Abfrage bei Programmpunkt 23, daß alle Bildpixel mit einer Schwelle verglichen wurden, so wird nach Programmpunkt 25 verzweigt.

Bei Programmpunkt 25 wählt die Recheneinheit 1 die Bildausschnitte des Bildes n+1, denen eine 1 zugeordnet wurde. Auf diese Weise ermittelt die Recheneinheit 1 bewegte Objekte bzw. Bilsausschnitte, die zur weiteren Auswertung des Bildes verwendet werden können. Nach Programmpunkt 25 wird zu Programmpunkt 13 zurückverzweigt und die Programmabfolge, wie beschrieben, erneut durchlaufen.

Das bevorzugte Ausführungsbeispiel wird anhand der Figuren 1 bis 3 näher erläutert. Das Programm wird nach dem Struktogramm in Figur 3 abgearbeitet. Bei Programmpunkt 10 wird das Programm gestartet und bei Programmpunkt 11 werden über die Eingabeeinheit 9 Anfangsbedingungen für das Programm festgelegt. Das Bild wird in diesem gewählten Beispiel in Bildausschnitte eingeteilt, die jeweils aus fünf mal fünf Bildpixeln bestehen. Das Beobachtungsfenster 4 wird aus den an den zu entscheidenden Bildausschnitt 5 angrenzenden Bildausschnitten gebildet.

Liegen für angrenzende Bildausschnitte des gleichen Bildes keine Entscheidungen mit einer Schwelle vor, so wird auf die entsprechenden Bildausschnitte des zeitlich vorhergehenden Bildes n zurückgegriffen. Eine Erweiterung des Verfahrens besteht darin, das Beobachtungsfenster 4 aus Bildausschnitten mehrerer zeitlich aufeinander folgender Bilder zu bilden. Es wird festgelegt, daß die Bildausschnitte von links nach rechts und von oben nach unten abgearbeitet werden. Die Reihenfolge der Verarbeitung der Bildausschnitte kann je nach Anwendung auch auf eine andere Art und Weise erfolgen.

Für die Änderung der Bildsignale eines Bildausschnitts wird folgende Statistik festgelegt:

$$\Delta_k = (1 : s^2) \sum_i d_i^2,$$

wobei die Summe über alle Bildpixel i des zum entscheidenden Bildausschnittes 5 läuft und $d_i$ die Differenz des Bild-

signales eines Bildpixels des Bildes n+1 mit dem Bildsignal des gleich angeordneten Bildpixels des zeitlich vorhergehenden Bildes n ist und $s^2$ eine geschätzte Varianz oder ein Erfahrungswert für die Varianz des Differenzkamerarauschprozesses ist.

Weiterhin wird eine Schwelle So eingegeben, die für den Vergleich mit der Änderung verwendet wird, wenn aufgrund fehlender Ergebnisse noch keine Schwelle gebildet werden kann, wie dies für den ersten Bildausschnitt der Fall ist.

Die Berechnungsmethode für die Schwelle T wird über die Eingabetastatur 9 eingegeben und in diesem Beispiel folgendermaßen gewählt:

$T = T_s + T_v$, wobei $T_s$ im einfachsten Fall eine Konstante darstellt und $T_v$ gleich einer Summe $\sum_i C_i$ ist, die sich über alle Bildausschnitte i des gewählten Beobachtungsfensters 4 erstreckt. Die Koeffizienten $C_i$ werden folgendermaßen festgelegt:

$C_i = 0$, falls die Speicheradresse des Bildpixels eine 0 enthält oder $C_i = B$, falls die Speicheradresse des Bildausschnittes eine 1 enthält und der Bildausschnitt ein horizontaler oder vertikaler Nachbar des zu entscheidenden Bildausschnittes 5 ist, oder $C_i = C$, falls die Speicheradresse des Bildausschnittes eine 1 enthält und ein diagonaler Nachbar zu dem zu entscheidenden Bildausschnitt 5 ist.

Der Schwellenanteil $T_s$ wird z.B. mit folgender Formel festgelegt:

$T_s = T_{so} + 2(B+C)$. Die Parameter $T_{so}$, B und C, die für die Ermittlung der Schwelle $T_s$ verwendet werden, werden . in diesem Beispiel mit: B=12, C=6 und $T_{so}$=55.1 eingegeben. Dies entspricht einer Signifikanz a von $5*10^{-4}$. Die Konstanten B, C und $T_s$ können je nach Anwendung auch andere Werte annehmen. Bei Programmpunkt 13 nimmt die Bildaufnahmeeinheit 3 ein Bild auf und die Recheneinheit 1 legt das Bild pixelweise im Speicher 2 ab. Bei Programmpunkt 15 teilt die Recheneinheit 1 das abgelegte Bild entsprechend den Eingaben in Bildausschnitte ein und wählt für den ersten zu entscheidenden Bildausschnitt 5 das eingegebene Beobachtungsfenster 4.

In Figur 2 ist dieses Beispiel dargestellt: Der zu entscheidende Bildausschnitt 5 ist in Bild n+1 dunkel schraffiert eingezeichnet. Das Beobachtungsfenster 4 ergibt sich aus den angrenzenden Bildausschnitten, die in Figur 2 schraffiert und umrandet eingezeichnet sind. Da nicht für alle angrenzenden Bildausschnitte des Bildes n+1 Vergleichsergebnisse mit einer Schwelle vorliegen, wird auf die entsprechenden Bildausschnittes des Bildes n, die ebenfalls schraffiert und umrandet eingezeichnet sind, zur Ermittlung der Schwelle zurückgegriffen. Betrachtet man das gewählte Beobachtungsfenster 4, das die Bildausschnitte 11, 12, 13, 14 des Bildes n+1 und die Bildausschnitte 15, 16, 17, 18 des Bildes n enthält, wobei die Bildausschnitte 11, 12, 13, 14, 17, 18 als geändert und die Bildausschnitte 15, 16 als nicht geändert entschieden wurden, so ergibt sich folgende Schwelle T:

$$T = T_S - T_V = T_{SO} + 2(B+C) - \sum_i Ci$$

Bei gleicher Bewertung der Bildausschnitte des Bildes n+1 und des Bildes n ergibt sich für $\sum_i C_i$ für das Bild n+1: 2B+2C und für das Bild n:B+C.

Für die Schwelle ergibt sich somit

$$T = T_{so} + 2(B+C) - 3B-3C = T_{so}-B-C.$$

Bei Programmpunkt 19 bildet die Recheneinheit 1 nach der bei Programmpunkt 11 abgelegten Statistik die Differenz zwischen den Bildsignalen des zu vergleichenden Bildausschnittes 5 und den Bildsignalen des gleich angeordneten Bildausschnittes 6 des vorhergehenden Bildes n.

In diesem Beispiel wurde die Änderung mit

$$\triangle_k = (1/s^2) \sum_i d^2{}_i$$

festgelegt. Anstelle der Quadrate der Differenzsignale $d_i$ können auch die Beträge $|d_i|$ mit dem Vorfaktor $2*\sqrt{2}$ verwendet werden, dann kann auf die Standardabweichung s normiert werden. Die Änderung wird mit der Schwelle T, die im Programmpunkt 17 ermittelt wurde, verglichen. Bei Programmpunkt 21 ordnet die Recheneinheit 1 den Speicheradressen der Bildpixel des zu vergleichenden Bildausschnittes 5 eine 1 zu, wenn die Änderung größer als die Schwelle T ist und in den anderen Fällen eine 0. Für die Bildpixel der gespeicherten Bilder sind im Speicher 2 Speicheradressen abgelegt. Bei Programmpunkt 23 erfolgt von der Recheneinheit 1 die Abfrage, ob alle Bildpixel bzw. Bildausschnitte des Bildes n+1 mit einer Schwelle T verglichen worden sind. Ist dies nicht der Fall, so wird nach Programmpunkt 15 zurückverzweigt und ein weiterer Bildausschnitt entsprechend den Programmpunkten 15 bis 21 mit einer Schwelle verglichen. Ergibt die Abfrage bei Programmpunkt 23, daß alle Bildausschnitte des Bildes mit einer Schwelle verglichen worden sind, so wird nach Programmpunkt 25 verzweigt. Bei Programmpunkt 25 wählt die Recheneinheit 1 die Bildausschnitte aus, die als bewegte Objekte erkannt wurden.

Die Recheneinheit 1 ermittel aus den Werten, die in den Speicheradressen der Bildausschnitte abgelegt sind, zusammenhängende bewegte Objekte. Auf diese Weise werden z.B. bewegte Fahrzeuge mit einer automatischen Bildüberwachung ermittelt.

Vorzugsweise kann die Schwelle T für den Vergleich mit der Änderung für einen Bildausschnitt, der die Größe 1*1 Bildpixel hat und wenn nur das Ergebnis des in Bild (n) gleichen Ausschnittes in der Schwelle berücksichtigt wird, folgendermaßen erstellt werden: $T=T_s+T_v$, wobei $T_s$ ein konstanter Wert ist und $T_v$ einen variablen Wert darstellt. Die Schwelle T ist größer als $T_s$ für den Fall, daß sich das Beobachtungsfenster nicht geändert hat und die Schwelle T ist kleiner als $T_s$ für den Fall, daß sich das Beobachtungsfenster geändert hat. Der Wert $T_s$ wird durch die Vorgabe einer Signifikanz a, die ein Maß für die Abschätzung einer Wahrscheinlichkeit darstellt, ermittelt: $Prob(d^2_i>TsIHo)=a$, für den Fall, daß die Quadratsumme als Statistik für die Änderung des Bildausschnittes herangezogen wird. Die Ermittlung und die Bedeutung der Signifikanz a ist bei Bronstein, Taschenbuch der Mathematik, Teubner Verlag, S.677 ff., beschrieben. Für den Fall, daß die Absolutsumme als Statistik verwendet wird, ergibt sich folgende Signifikanz: $Prob (2*\sqrt{2}Id_iI>T_sIHo)=a$. Zur Berechnung der Wahrscheinlichkeiten im Falle der Quadratsumme wird eine $\chi^2$-Verteilung mit einem Freiheitsgrad und im Falle der Absolutsumme eine $\chi^2$-Verteilung mit zwei Freiheitsgraden, wie bei Bronstein, Taschenbuch der Mathematik, Teubner Verlag, S. 686 ff., erläutert, herangezogen. $T_v$ wird folgendermaßen ermittelt: $T_v=2*ln[p(I_kIHo)/p(I_kIHI)]$, wobei $p(I_kIH1)$ einen Erfahrungswert für die Wahrscheinlichkeit bezeichnet, daß einer korrekten Entscheidung für "geändert" (d.h. Bildpixel hat sich geändert) für den zu entscheidenden Bildausschnitt im Bild n+1 die korrekte Entscheidung $I_k$ im Vorgängerbild vorangeht, und $p(I_kIHo)$ einen Erfahrungswert für die Wahrscheinlichkeit bezeichnet, daß einer korrekten Entscheidung für nicht geändert im Bild n+1 die korrekte Entscheidung $I_k$ im Vorgängerbild n vorangeht, wobei $p(I_k = geändertIH1)>>p(I_k=nicht geändertIH1)$ und $p(I_k=nicht geändertIHo)>>p(I_k=geändertIHo)$ gilt. T hängt also von $I_k$ ab, d.h. $T(I_k)=T_s+T_v(I_k)$.

Falls der Bildausschnitt größer als 1*1 Bildpixel ist, werden die Schwellen $T(I_k)$ transformiert, indem zwei Signifikanzen $a(I_k)$ gemäß $Prob(d^2_k>T(I_k)IHo)=a(I_k)$ bzw. $Prob(2*\sqrt{2}Id_kI>T(I_k)IHo)=a(I_k)$ gebildet werden. Daraus können dann mittels $Prob(\Delta_kT(I_k)) (Ho)=a(I_k)$ die Entscheidungsschwellen $T(I_k=nicht geändert)$ und $T(I_k=geändert)$ für größere Bildausschnitte ermittelt werden.

Eine weitere für die Praxis sehr bedeutsame Ausbildung des Verfahrens besteht darin, daß die für die Abarbeitung des Programmes notwendigen Konstanten, Statistiken und Berechnungsmethoden im Speicher 2 abgelegt sind, so daß das Rechenprogramm ohne Eingabe vom Benutzer ausgeführt werden kann.

**Patentansprüche**

1. Verfahren zur Detektion von Änderungen in elektronisch aufgenommenen Bewegtbildern mittels einer Recheneinheit, wobei die Bildsignale pixelweise vorliegen und in einem Speicher abgelegt werden und mittels der Recheneinheit die Änderung eines Bildausschnittes mit mindestens einem Bildpixel im Vergleich zu dem in der Bildebene gleich angeordneten Bildausschnittes mindestens eines vorausgehenden Bildes ermittelt werden, die Änderung von der Recheneinheit mit einer vorgegebenen Schwelle verglichen wird und den für jedes Bildpixel des Bildausschnittes im Speicher abgelegten Speicheradressen je nachdem, ob die Änderung größer oder kleiner als die Schwelle ist, unterschiedliche Werte zugeordnet werden,

dadurch gekennzeichnet,

daß von der Recheneinheit (1) aus den abgespeicherten Bildsignalen ein Beobachtungsfenster (4) im Bild-/Zeitraum ausgewählt wird, das den zu vergleichenden Bildausschnitt (5) und mindestens einen weiteren schon mit einer Schwelle verglichenen Bildausschnitt enthält,

daß von der Recheneinhelt (1) die Schwelle in Abhängigkeit davon, ob die Änderung des schon verglichenen Bildausschnittes kleiner oder größer als seine Schwelle war, verändert wird, und

daß von der Recheneinheit (1) das Ergebnis des Vergleichs zwischen der Änderung des zu vergleichenden Bildausschnittes (5) und der ermittelten Schwelle mindestens einer der im Speicher (2) abgelegten Adresse eines Bildpixels des Bildausschnittes (5) zugewiesen wird.

2. Verfahren nach Anspruch 1, dadurch gekennzeichnet, daß von der Recheneinheit (1) die Ergebnisse der Vergleiche der Änderungen der im Beobachtungsfenster (4) enthaltenen Bildausschnitte mit ihren Schwellen bei der Ermittlung der Schwelle nach Abstand und Orientierung in Bezug auf den zu vergleichenden Bildausschnitt (5) unterschiedlich gewichtet berücksichtigt werden.

3. Verfahren nach einem der Ansprüche 1 und 2, dadurch gekennzeichnet,
daß von der Recheneinheit (1) die Änderung des zu vergleichenden Bildausschnittes (5) im Vergleich zu einem in der Bildebene gleich angeordneten Bildausschnitt (6) mindestens eines vorausgehenden Bildes durch die Differenzen der Bildsignale ermittelt wird, wobei von der Recheneinheit (1) vorzugsweise die Summe der quadrierten Differenzen der Bildsignale auf die Leistung (Varianz) des Kamerarauschens im Differenzbild normiert wird, oder die Schwelle mit der Leistung des Kamerarauschens im Differenzbild multipliziert wird.

4. Verfahren nach einem der Ansprüche 1 und 2, dadurch gekennzeichnet,
daß von der Recheneinheit (1) die Änderung des zu vergleichenden Bildausschnittes (5) im Vergleich zu einem in der Bildebene gleich angeordneten Bildausschnitt (6) mindestens eines vorausgehenden Bildes durch die Differenzen der Bildsignale ermittelt wird, wobei von der Recheneinheit (1) vorzugsweise die Summe der Absolutbeträge der Differenzen der Bildsignale auf die Standardabweichung des Kamerarauschens im Differenzbild normiert wird, oder die Schwelle mit der Leistung des Kamerarauschens im Differenzbild multipliziert wird.

5. Verfahren nach einem der Ansprüche 1 bis 4, dadurch gekennzeichnet,
daß von der Recheneinheit (1) das Beobachtungsfenster (4) aus dem zu vergleichenden Bildausschnitt (5) und den angrenzenden Bildausschnitten gebildet wird.

6. Verfahren nach Anspruch 5, dadurch gekennzeichnet,
daß von der Recheneinheit (1) anstelle der noch nicht mit einer Schwelle entschiedenen zum selben Bild gehörenden Bildausschnitte die in der Bildebene gleich angeordneten Bildausschnitte des vorausgehenden Bildes, die schon mit einer Schwelle verglichen worden sind, verwendet werden.

7. Verfahren nach einem der Ansprüche 1 bis 6, dadurch gekennzeichnet,
daß von der Recheneinheit (1) zur Ermittlung der Schwelle das Ergebnis des Vergleichs des in Bezug auf den zu vergleichenden Bildausschnitt (5) in der Bildebene gleich angeordneten Bildausschnittes (6) mit seiner Schwelle mindestens eines vorausgehenden Bildes berücksichtigt wird.

8. Verfahren nach einem der Ansprüche 1 bis 7, dadurch gekennzeichnet,
daß von der Recheneinheit (1) die Schwelle aus einem festgelegten Anteil und einem Anteil, der in Abhängigkeit von den Ergebnissen der Vergleiche der in dem Beobachtungsfenster (4) enthaltenen Bildausschnitte ermittelt wird, gebildet wird.

9. Verfahren nach einem der Ansprüche 1 bis 8, dadurch gekennzeichnet,
daß von der Recheneinheit (1) zur Ermittlung der Änderung eines Bildausschnittes nur eine Teilmenge der im Bildausschnitt enthaltenen Bildsignale verwendet wird.

**Claims**

1. Process for detecting changes in electronically recorded moving images by means of a computing unit, the image signals being present pixel by pixel and being stored in a memory and the computing unit determining the change of an image detail having at least one image pixel in comparison with the image detail, arranged identically in the image plane, of at least one preceding image, the change being compared with a predetermined threshold by the computing unit and different values being assigned to the memory addresses stored for each image pixel of the image detail in the memory, depending on whether the change is greater or less than the threshold, characterized

in that the computing unit (1) selects from the stored image signals an observation window (4) in the image space with respect to a period of time, which contains the image detail (5) to be compared and at least one further image detail that has already been compared with a threshold,

7

in that the computing unit (1) changes the threshold depending on whether the change in the image detail already compared was less than or greater than its threshold, and

in that the result of the comparison between the change in the image detail (5) to be compared and the threshold determined is allocated by the computing unit (1) to at least one address, stored in the memory (2), of an image pixel of the image detail (5).

2. Process according to Claim 1, characterized

in that the computing unit (1) takes account of the results of the comparisons of the changes in the image details contained in the observation window (4) with their thresholds, during the determination of the threshold, in a differently weighted manner according to distance and orientation with regard to the image detail (5) to be compared.

3. Process according to one of Claims 1 and 2, characterized

in that the computing unit (1) determines the change of the image detail (5) to be compared in comparison with an image detail (6), arranged identically in the image plane, of at least one preceding image by means of the differences between the image signals, the computing unit (1) preferably normalizing the sum of the squared differences between the image signals to the power (variance) of the camera noise in the differential image, or multiplying the threshold by the power of the camera noise in the differential image.

4. Process according to one of Claims 1 and 2, characterized

in that the computing unit (1) determines the change of the image detail (5) to be compared in comparison with an image detail (6), arranged identically in the image plane, of at least one preceding image by means of the differences between the image signals, the computing unit (1) preferably normalizing the sum of the absolute values of the differences between the image signals to the standard deviation of the camera noise in the differential image, or multiplying the threshold by the power of the camera noise in the differential image.

5. Process according to one of Claims 1 to 4, characterized

in that the computing unit (1) forms the observation window (4) from the image detail (5) to be compared and the adjoining image details. in that the computing unit (1) forms the observation window (4) from the image detail (5) to be compared and the adjoining image details.

6. Process according to Claim 5, characterized

in that the computing unit (1) uses, instead of the image details which belong to the same image and have not yet been decided with a threshold, the image details of the preceding image which are arranged identically in the image plane and have already been compared with a threshold.

7. Process according to one of Claims 1 to 6, characterized

in that the computing unit (1), in order to determine the threshold, takes account of the result of the comparison of the image detail (6), arranged identically with regard to the image detail (5) to be compared in the image plane, with its threshold of at least one preceding image.

8. Process according to one of Claims 1 to 7, characterized

in that the computing unit (1) forms the threshold from a defined portion and a portion which is determined as a function of the results of the comparisons of the image details contained in the observation window (4).

9. Process according to one of Claims 1 to 8, characterized

in that only a subset of the image signals contained in the image detail is used by the computing unit (1) to determine the change in an image detail.

**Revendications**

1. Procédé de détection des modifications survenues dans des images en mouvement enregistrées de façon électronique au moyen d'une unité de calcul, les signaux se présentant sous la forme de pixels (éléments d'image) et étant disposés dans une mémoire et la variation d'un fragment d'image étant déterminée au moyen de l'unité de calcul avec au moins un élément d'image par comparaison avec le fragment d'image disposé de la même façon dans le plan de l'image d'au moins une image précédente, en comparant la variation, à l'aide de l'unité de calcul, par rapport à un seuil prédéfini et en associant aux adresses dans la mémoire déposées pour chaque élément du fragment d'image, des valeurs différentes selon que la modification est plus grande ou plus petite que le seuil,

caractérisé en ce qu'

- on sélectionne au moyen de l'unité de calcul (1), à partir des signaux d'images mis en mémoire, une fenêtre d'observation (4) dans l'espace image/temps, fenêtre qui contient le fragment d'image (5) à comparer et au moins un autre fragment d'image déjà comparé à un seuil,
- le seuil est au moyen de l'unité de calcul (1) modifié selon que la variation du fragment d'image déjà comparé est plus petite ou plus grande que ne l'était son seuil, et
- on envoie au moyen de l'unité de calcul (1) le résultat de la comparaison entre la modification du fragment d'image (5) à comparer et le seuil déterminé à au moins l'une des adresses déposées dans la mémoire (2) d'un élément (pixel) du fragment d'image (5).

2. Procédé selon la revendication 1,
caractérisé en ce que
les résultats des comparaisons des modifications des fragments d'image contenus dans la fenêtre d'observation (4) sont pris en considération par l'unité de calcul (I), avec leurs seuils lors de la détermination du seuil en fonction de la distance et de l'orientation par rapport au fragment d'image (5) à comparer, en effectuant des pondérations différentes.

3. Procédé selon l'une des revendications 1 et 2,
caractérisé en ce que
la modification du fragment d'image (5) à comparer est déterminée par l'unité de calcul (1) par comparaison avec un fragment d'image (6), disposé de la même façon dans le plan de l'image, d'au moins une image précédente au moyen des différences des signaux d'image, en cadrant par l'unité de calcul (1) de préférence la somme des carrés des différences des signaux d'image sur la puissance (la variance) du bruit de fond de la camera dans l'image différentielle, ou en multipliant le seuil par la puissance du bruit de fond de la camera dans l'image différentielle.

4. Procédé selon l'une des revendications 1 et 2,
caractérisé en ce que
la modification du fragment d'image (5) à comparer est déterminée par l'unité de calcul (1) par comparaison avec un fragment d'image (6), disposé de la même façon dans le plan de l'image, d'au moins une image précédente au moyen des différences des signaux d'image, en cadrant par l'unité de calcul (1) de préférence la somme des montants absolus des différences des signaux d'image sur l'écart type du bruit de fond de la camera dans l'image différentielle, ou en multipliant le seuil par la puissance du bruit de fond de la camera dans l'image différentielle.

5. Procédé selon l'une des revendications 1 à 4,
caractérisé en ce qu'
on constitue au moyen de l'unité de calcul (1) la fenêtre d'observation (4) à partir du fragment d'image à comparer (5) et des fragments d'image adjacents

6. Procédé selon la revendication 5,
caractérisé en ce que
l'unité de calcul (1) utilise, à la place des fragments d'image qui appartiennent à la même image sur lesquels on n'as encore pris de décision par comparaison avec un seuil, les fragments d'image, disposés de la même façon dans le plan de l'image, de l'image précédente, qui ont déjà été comparés à un seuil.

7. Procédé selon l'une des revendications 1 à 6,
caractérisé en ce qu'
on fait prendre en considération par l'unité de calcul (1) pour déterminer le seuil le résultat de la comparaison du fragment d'image (6), disposé de la même façon dans le plan de l'image par rapport au fragment d'image (5) à comparer, avec le seuil d'au moins une image précédente.

8. Procédé selon l'une des revendications précédentes 1 à 7,
caractérisé en ce qu'
on forme à partir de l'unité de calcul (1) le seuil qui se compose d'une partie fixe et d'une partie qui est déterminée en fonction des résultats des comparaisons des fragments d'image contenus dans la fenêtre d'observation (4).

9. Procédé selon l'une des revendications 1 à 8,

caractérisé en ce que
l'unité de calcul (1) n'utilise qu'une quantité partielle des signaux d'image contenus dans le fragment d'image pour déterminer la modification d'un fragment d'image.

FIG. 1

FIG. 2

n

n + 1

FIG. 3